# EUROPÄISCHE PATENTSCHRIFT

(11) **EP 2 043 369 B1**
(45) Veröffentlichungstag und Bekanntmachung des Hinweises auf die Patenterteilung: **23.12.2009**
(21) Anmeldenummer: 08013307.7
(22) Anmeldetag: 24.07.2008
(51) Int. Cl.: H04N 7/18, G08B 25/08

(54) **Videotürsprechanlage**
Video door interphone
Installation vocale de porte vidéo

(30) Priorität: 25.09.2007 DE 102007045867
(43) Veröffentlichungstag der Anmeldung: 01.04.2009
(73) Patentinhaber: Albrecht Jung GmbH & Co. KG, 58579 Schalksmühle (DE)
(72) Erfinder: Kandt, Richard, 44803 Bochum (DE); Kohlhaas, Johannes, 58579 Schalksmühle (DE)

(56) Entgegenhaltungen:
- US-A1- 2002 140 803
- US-A1- 2003 103 075
- US-A1- 2006 092 011
- US-A1- 2007 262 857

## Beschreibung

Die vorliegende Erfindung geht von einer gemäß Oberbegriff des Hauptanspruches konzipierten Videotürsprechanlage aus.

Derartige Videotürsprechanlagen sind in der Regel dafür vorgesehen, bei Bedarf eine Kommunikationsmöglichkeit zwischen einem Wohnungsinhaber und einem Besucher zu schaffen. Oftmals weist die Außenstation einer solchen Videotürsprechanlage mehrere Betätigungstasten auf, damit sich der Besucher beim ausgewählten Wohnungsinhaber bemerkbar machen kann. Außerdem ist eine solche Außenstation mit einer Kamera versehen, um das aufgenommene Bild auf einem Display der Wohnungsstation zur Anzeige zu bringen. Zudem sind solche Videotürsprechanlagen oftmals mit einer Lautsprechereinheit und einem Mikrophon versehen, damit sich der Wohnungsinhaber und der Besucher auch akustisch verständigen können. Der Wohnungsinhaber kann also aufgrund von akustischen Informationen und von Bildinformationen entscheiden, ob dem Besucher Einlass gewährt wird. Oftmals sind auch zur Betätigung der Wohnungsstation einer solchen Videotürsprechanlage eine ganze Reihe von Betätigungselementen notwendig, die als separat zu montierende Betätigungstasten ausgeführt sind.

Durch die DE 10 2006 033 133 B3 ist eine entsprechende Videotürsprechanlage bekannt geworden. Diese Videotürsprechanlage ist mit einer Einrichtung zur Erfassung von Personen mittels Kamera versehen, wobei das von der Kamera der Außenstation aufgenommene Bild auf einem Display einer Wohnungsstation zur Anzeige gebracht wird. Die Kamera nimmt eine Umgebungsansicht mit einem großen Erfassungsbereich auf, wobei auf dem Display der Wohnungsstation in Abhängigkeit der Erfassung eines Temperatursensors lediglich ein Bildausschnitt zur Anzeige gebracht wird. Da dieser Bildausschnitt nicht manuell veränderbar und abhängig von der in der Umgebung vorhandenen Wärmestrahlung ist, kommt es dazu, dass nicht immer der für den Benutzer wirklich interessante Bildausschnitt auf dem Display der Wohnungsstation zur Anzeige gebracht wird und dieser dann aufgrund eingeschränkter Informationen die Entscheidung treffen muss, ob dem Besucher Einlass gewährt wird.

Des weiteren ist durch die US 2003/0103075 A1 eine Videokonferenzanlage bekannt geworden, welche zur Erfassung von Personen eine Kamera aufweist und zur Darstellung ein Gerät mit einem Display umfasst, dass das von der Kamera aufgenommene Bild zur Anzeige bringt. Die Kamera kann auf verschiedene Erfassungsbereiche eingestellt werden, so dass das aufgenommene Bild entsprechend auf dem Display zur Anzeige gebracht wird. Das Display ist als Touchscreen ausgeführt, wobei auf dem Display zur Bedienung zumindest ein Bereich aktiviert ist der durch Berührung eine Zoomdarstellung der von der Kamera aufgenommenen Umgebungsansicht erlaubt.

Zudem ist es durch die US 2006/0092011 A1 bekannt, mehrere Systeme bzw. Einrichtungen über ein Netzwerk datentechnisch miteinander in Verbindung zu bringen. Außerdem ist durch die US 2007/0262857 A1 ein automatisches Visualisierungssystem für Gebäude bekannt geworden, welches über einen Server die Möglichkeit bietet, von einer Kamera aufgenommene Bilder z. B. auf einem PC Monitor, einem Handy oder PDA zur Anzeige zu bringen.

Des weiteren ist es durch die US 2002/0140803 A1 bekannt, auf einem Touchscreen zur Anzeige gebrachte Bilder über ebenfalls auf dem Touchscreen zur Anzeige gebrachte Bedienelemente zu fokussieren bzw. zu zoomen.

Der vorliegenden Erfindung liegt deshalb die Aufgabe zugrunde, eine Videotürsprechanlage zu schaffen, bei welcher der Benutzer auf einfache Art und Weise den von der Kamera der Außenstation gelieferten und auf dem Display der Wohnungsstation dargestellten Bildausschnitt wunschgemäß derart auswählen bzw. verändern kann, so dass eine umfassende Information über die sich an der Außenstation abspielenden Situation gewährleistet ist.

Diese Aufgabe wird durch die im Hauptanspruch angegebenen Merkmale gelöst.

Bei einer solchermaßen ausgebildeten Videotürsprechanlage ist besonders vorteilhaft, dass das Display als Touchscreen ausgeführt ist und somit die Bedienung über auf dem Display aktivierte Bedienbereiche erfolgen kann. Eine solche Ausführung einer Videotürsprechanlage bietet damit auf kostengünstige Art und Weise eine besonders kompakte Bauform, da die manuellen Betätigungstasten entfallen können.

Weitere vorteilhafte Ausgestaltungen sind in den Unteransprüchen angegeben. Anhand eines in den Zeichnungen näher dargestellten Ausführungsbeispieles sei der erfindungsgemäße Gegenstand näher erläutert. Dabei zeigen:
- Fig. 1:: prinziphaft eine Videotürsprechanlage;
- Fig. 2:: prinziphaft eine mit einer Kamera versehene Außenstation;
- Fig. 3:: prinziphaft eine mit einem Display versehene Wohnungsstation (Innenstation);
- Fig. 4:: prinziphaft eine von der Kamera aufgenommene, auf dem Display dargestellte Umgebungsansicht;
- Fig. 5:: prinziphaft eine gemäß Fig. 4 auf dem Display zur Anzeige gebrachte Standardansicht.

Wie aus den Zeichnungen hervorgeht, besteht eine solche Videotürsprechanlage aus zumindest einer mit einer Kamera 1 ausgerüsteten Außenstation 2, an welche zumindest eine mit einem Display 3 versehene Wohnungsstation 4 angeschlossen ist.

Wie des weiteren aus den Figuren hervorgeht, sind an eine Außenstation 2 drei Wohnungsstationen 4 angeschlossen. Die Verbindung wird dabei über eine elektrische Leitung 8 bzw. das Bussystem des Gebäudes hergesellt. Die Außenstation 2 der Videotürsprechanlage ist mit einer Einrichtung zur Erfassung von Personen mittels einer Kamera 1 vorgesehen. Das von der Kamera 1 aufgenommene Bild wird datentechnisch an eine der drei je mit einem Display 3 ausgerüsteten Wohnungsstationen 4 übermittelt. Die Kamera 1 nimmt eine Umgebungsansicht mit einem großen Erfassungsbereich auf, wobei in der Regel auf dem Display 3 der betreffenden Wohnungsstation 4 als Standardansicht ein kleiner, lediglich einen Bildausschnitt darstellender Bildbereich des von der Kamera 1 aufgenommenen Bildes zur Anzeige gebracht wird. Das Display 3 jeder Wohnungsstation 4 ist als Touchscreen ausgeführt, wobei zur Bedienung auf dem Display 3 mehrere Bedienbereiche 5 aktiviert sind. Der auf dem Display 3 dargestellte Bildausschnitt kann durch berühren der aktiven Bedienbereiche 5 sowohl in seiner Position, als auch in seiner Zoomdarstellung frei im Rahmen der gesamten Umgebungsansicht des durch die Kamera 1 aufgenommenen Bildes ausgewählt werden. Somit hat der Benutzer bzw. Wohnungsinhaber die Möglichkeit auf komfortable Art und Weise den auf dem Display 3 dargestellten Bildausschnitt so zu verändern, so dass er aufgrund umfassender Informationen die Entscheidung treffen kann, ob dem Besucher Einlass gewährt wird. Es ist aber auch möglich, dass sich der Wohnungsinhaber schon durch die Darstellung der Umgebungsansicht in Bezug auf die Einlassgewährung als ausreichend informiert ansieht und diese z. B. als Standardansicht wählt.

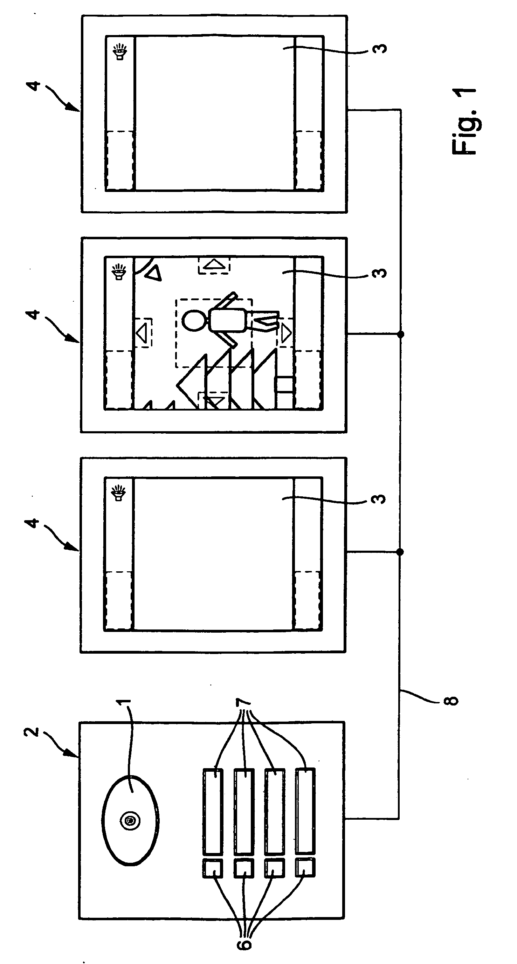

Wie insbesondere aus Figur 1 hervorgeht, weist die Videotürsprechanlage eine, mit einer Kamera 1 versehene Außenstation 2 auf, an welche über eine elektrische Leitung 8 bzw. das Bussystem des Gebäudes drei mit einem Display 3 versehene Wohnungsstationen 4 angeschlossen sind.

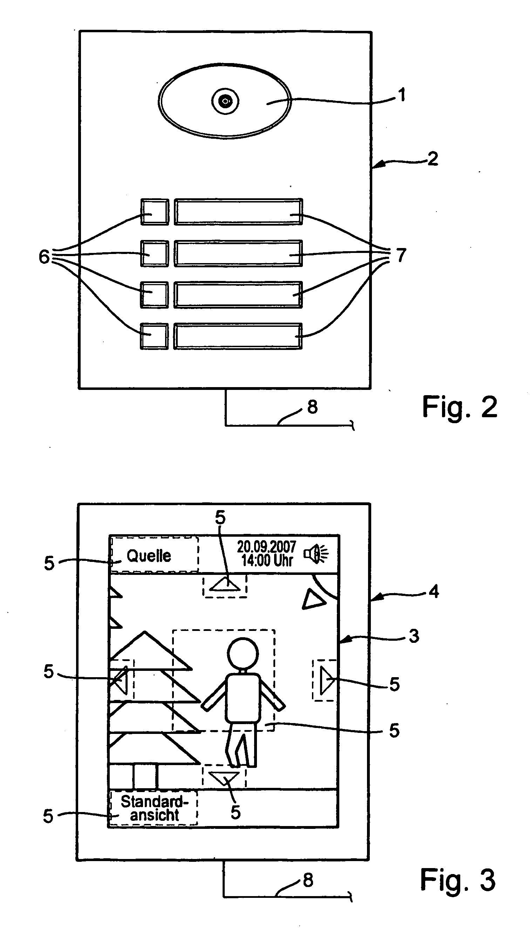

Wie insbesondere aus Figur 2 hervorgeht, ist die Außenstation 2 der Videotürsprechanlage mit einer Kamera 1 und mehreren Türklingeln 6 und zugeordneten Namensschildern 7 ausgerüstet. Zur Datenübertragung und Stromversorgung ist die Außenstation 2 an eine elektrische Leitung 8 angeschlossen.

Wie insbesondere aus Figur 3 hervorgeht, ist auch die Wohnungsstation 4 zur Datenübertragung und Stromversorgung an eine elektrische Leitung 8 angeschlossen. Die Wohnungsstation 4 ist zudem zur Darstellung der von der Kamera aufgenommenen Bilder mit einem als Touchscreen ausgeführten Display 3 ausgerüstet. Da über das als Touchscreen ausgebildete Display 3 mit seinen aktivierten Bedienbereichen 5 auch die Bedienung erfolgen kann, weist diese ansonsten keine separat zu montierenden Betätigungstasten auf. Es ist also eine Wohnungsstation 4 realisiert, die bei hoher Funktionsdichte eine besonders kompakte Bauform aufweist.

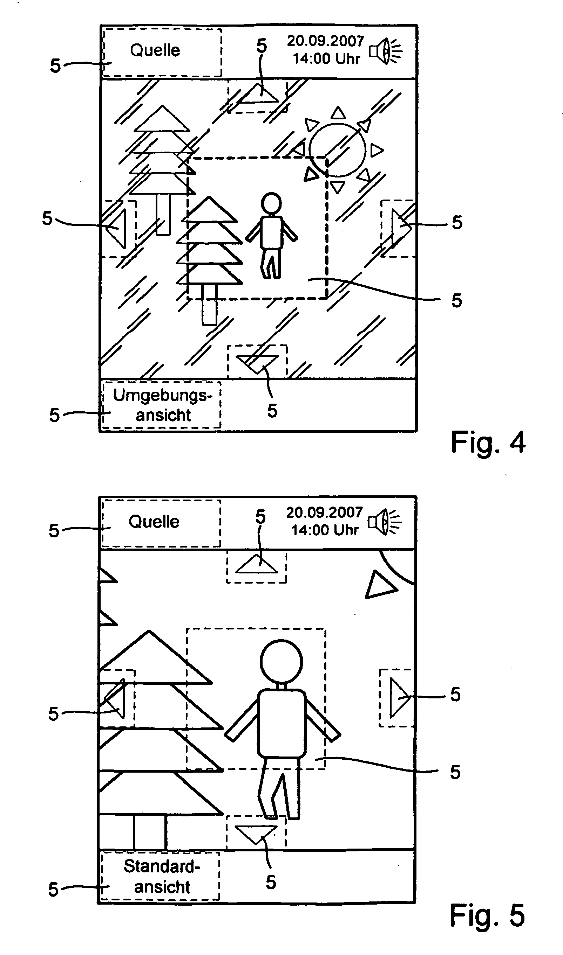

Wie insbesondere aus Figur 3, Figur 4 und Figur 5 hervorgeht, weist das als Touchscreen ausgebildete Display 3 sieben aktivierte Bedienbereiche 5 auf, welche auf Berührung reagieren. Ein oberer Bedienbereich 5 und ein unterer Bedienbereich 5 sind jeweils als eingeblendete Balken gekennzeichnet und zusätzlich mit Klartext und/oder Piktogrammen versehen. Vier weitere Bedienbereiche 5 sind jeweils als Pfeil dargestellt und ein mittlerer Bedienbereich 5 ist als halbtransparenter Rahmen ausgeführt. Der obere Bedienbereich 5 ist zur Steuerung der Kamera 1, zur Anzeige der Uhrzeit und gegebenenfalls zur Beeinflussung eines angeschlossenen Lautsprecher vorgesehen. Der untere Bedienbereich 5 dient zum schnellen Wechsel zwischen der Umgebungsansicht und der einen Bildausschnitt darstellenden Standardansicht und kann gegebenenfalls auch zum Abruf von in einem Bildspeicher abgelegten Bildern genutzt werden. Durch Berührung des mittleren Bedienbereiches 5 wird ein Zoomvorgang bei der dargestellten Bildansicht in Gang gesetzt. Über die vier weiteren als Pfeile gekennzeichneten Bedienbereiche 5 kann die Bildansicht in entsprechender Richtung verschoben werden. Es ist somit eine Wohnungsstation 4 realisiert, bei welcher der Benutzer auf einfache Art und Weise den von der Kamera 1 der Außenstation 2 gelieferten und auf dem Display 3 dargestellten Bildausschnitt wunschgemäß derart auswählen bzw. verändern kann, so dass eine umfassende Information über die sich an der Außenstation 2 abspielenden Situation gewährleistet ist.

## Patentansprüche

1. Videotürsprechanlage zur Kommunikation zwischen einem Wohnungsinhaber und einem Besucher mit einer Einrichtung zur Erfassung von Personen mittels zumindest einer Kamera (1) und einem Display (3), das zur Anzeige des von der Kamera (1) aufgenommenen Bildes vorgesehen ist, wobei eine mit der Kamera (1) ausgerüstete Außenstation (2) vorgesehen ist, an welche über eine elektrische Leitung (8) oder das Bussystem des Gebäudes zumindest eine mit einem Display (3) versehene Wohnungsstation (4) angeschlossen ist, wobei die Kamera (1) eine Umgebungsansicht mit einem großen Erfassungsbereich aufnimmt, und dass auf dem Display (3) als Standardansicht ein kleiner, lediglich einen Bildausschnitt darstellender Bildbereich des von der Kamera (1) aufgenommenen Bildes zur Anzeige gebracht wird, und dass das Display (3) als Touchscreen ausgeführt ist, und dass auf dem Display (3) zur Bedienung zumindest ein Bedienbereich (5) aktiviert ist, und dass der auf dem Display (3) dargestellte Bildausschnitt durch berühren der Bedienbereiche (5) sowohl in seiner Position, als auch in seiner Zoomdarstellung frei im Rahmen der gesamten Umgebungsansicht des durch die Kamera (1) aufgenommenen Bildes wählbar ist, so dass der Benutzer wunschgemäß den dargestellten Bildausschnitt verändern kann, so dass eine umfassende Information über die sich an der Außenstation (2) abspielende Situation gewährleistet ist.

2. Videotürsprechanlage nach Anspruch 1, **dadurch gekennzeichnet, dass** zumindest ein aktiver Bedienbereich (5) durch ein Symbol gekennzeichnet ist.

3. Videotürsprechanlage nach Anspruch 1 oder 2, **dadurch gekennzeichnet, dass** zumindest ein aktiver Bedienbereich (5) durch einen dargestellten Pfeil gekennzeichnet ist.

4. Videotürsprechanlage nach einem der Ansprüche 1 bis 3, **dadurch gekennzeichnet, dass** zumindest ein aktiver Bedienbereich (5) durch einen eingeblendeten Rahmen gekennzeichnet ist.

5. Videotürsprechanlage nach einem der Ansprüche 1 bis 4, **dadurch gekennzeichnet, dass** zumindest ein aktiver Bedienbereich (5) durch einen eingeblendeten Balken gekennzeichnet ist.

6. Videotürsprechanlage nach einem der Ansprüche 1 bis 5, **dadurch gekennzeichnet, dass** zumindest ein Bedienbereich (5) durch zumindest einen Buchstaben und/oder durch eine Ziffer gekennzeichnet ist.

7. Videotürsprechanlage nach einem der Ansprüche 1 bis 6, **dadurch gekennzeichnet, dass** zumindest einem Bedienbereich (5) ein Klartext zugeordnet ist.

8. Videotürsprechanlage nach einem der Ansprüche 1 bis 7, **dadurch gekennzeichnet, dass** zumindest einem Bedienbereich (5) ein Piktogramm zugeordnet ist.

9. Videotürsprechanlage nach einem der Ansprüche 1 bis 8, **dadurch gekennzeichnet, dass** zumindest ein Bedienbereich (5) durch eine halbtransparente Darstellung gekennzeichnet ist.

10. Videotürsprechanlage nach einem der Ansprüche 1 bis 9, **dadurch gekennzeichnet, dass** zur Aufbereitung der Bilddaten zumindest eine Bildverarbeitungseinheit vorgesehen ist.

11. Videotürsprechanlage nach einem der Ansprüche 1 bis 10, **dadurch gekennzeichnet, dass** zur Speicherung der von der Kamera (1) aufgenommenen Bilder zumindest ein Bildspeicher vorhanden ist.

12. Videotürsprechanlage nach einem der Ansprüche 1 bis 11, **dadurch gekennzeichnet, dass** zumindest eine Kamera (1) mit einem optischen Zoom ausgerüstet ist.

13. Videotürsprechanlage nach einem der Ansprüche 1 bis 12, **dadurch gekennzeichnet, dass** zur Darstellung von Bildausschnitten ein digitaler Zoom vorgesehen ist.

14. Videotürsprechanlage nach einem der Ansprüche 1 bis 13, **dadurch gekennzeichnet, dass** zumindest eine Kamera motorisch verfahrbar ist.

## Claims

1. Video door entry system for intercommunications between an occupant of and a visitor to a dwelling with a facility for viewing individuals by means of at least one camera (1) and a screen (3) provided for displaying the image recorded by the camera (1), for which purpose an external station (2) fitted with the camera (1) is provided to which at least one interior station (4) equipped with a screen (3) is connected by an electrical cable (8) or by way of the bus system of the building, with the camera (1) recording a surrounding view with a large coverage range, and the standard view depicted on the screen (3) being a small picture area of the image recorded by the camera (1) showing only a section of the image, and with the screen (3) being implemented as a touchscreen, and with at least one operating zone (5) being activated on the screen (3) for operator input and that, by touching this operating zone (5), the position as well as the zoom representation of the image section shown on the screen (3) is freely selectable within the range of the entire surrounding view of the image recorded by the camera (3), so that the user can change the represented image section as he/she wishes in order to ensure comprehensive information on the situation occurring at the external station (2).

2. Video door entry system according to Claim 1, **characterised in that** at least one active operating zone (5) is marked by a symbol.

3. Video door entry system according to Claim 1 or Claim 2, **characterised in that** at least one active operating zone (5) is marked by a depicted arrow.

4. Video door entry system according to any of Claims 1 to 3, **characterised in that** at least one active operating zone (5) is marked by an overlaid frame.

5. Video door entry system according to any of Claims 1 to 4, **characterised in that** at least one active operating zone (5) is marked by an overlaid bar.

6. Video door entry system according to any of Claims 1 to 5, **characterised in that** at least one operating zone (5) is marked by at least one letter and/or one number.

7. Video door entry system according to any of Claims 1 to 6, **characterised in that** plain text is allocated to at least one operating zone (5).

8. Video door entry system according to any of Claims 1 to 7, **characterised in that** a pictogram is allocated to at least one operating zone (5).

9. Video door entry system according to any of Claims 1 to 8, **characterised in that** at least one operating zone (5) is marked by a semi-transparent representation.

10. Video door entry system according to any of Claims 1 to 9, **characterised in that** at least one image processing unit is provided for editing the image data.

11. Video door entry system according to any of Claims 1 to 10, **characterised in that** at least one image memory is provided for the purpose of storing the images recorded by the camera (1).

12. Video door entry system according to any of Claims 1 to 11, **characterised in that** at least one camera (1) is equipped with an optical zoom.

13. Video door entry system according to any of Claims 1 to 12, **characterised in that** a digital zoom is provided for representing sections of the image.

14. Video door entry system according to any of Claims 1 to 13, **characterised in that** at least one camera is movable by motor power.

## Revendications

1. Interphone vidéo de porte pour la communication entre un propriétaire de logement et un visiteur avec une installation destinée à la saisie des personnes au moyen d'au moins une caméra (1) et d'un écran (3) qui est prévu pour l'affichage de l'image prise par la caméra (1) ; une station extérieure (2) équipée de la caméra (1) est prévue ; au moins une station de logement (4) équipée d'un écran (3) est raccordée à cette station par l'intermédiaire d'une conduite électrique (8) ou du système de bus du bâtiment ; la zone couverte par la caméra (1) dans son environnement lors de la prise de vues est large et seule une petite partie de l'image prise par la caméra est affichée à l'écran (3) en tant que vue standard ; l'écran (3) est réalisé sous la forme d'un écran tactile ; à l'écran (3), au moins une zone de commande (5) est activée pour les manipulations, et il est possible de sélectionner librement la section d'image représentée à l'écran (3) en touchant les zones de commande (5) pour modifier tant sa position que son degré de zoom dans le cadre de l'ensemble de l'image de l'environnement saisie par la caméra (1), de telle sorte que l'utilisateur peut modifier à volonté la section d'image représentée, une information précise sur la scène se déroulant à proximité de la station extérieure (2) étant ainsi garantie.

2. Interphone vidéo de porte selon la revendication 1, **caractérisé par le fait qu**'au moins une zone de commande (5) active est **caractérisée par** un symbole.

3. Interphone vidéo de porte selon la revendication 1 ou 2, **caractérisé par le fait qu**'au moins une zone de commande (5) active est **caractérisée par** une flèche représentée.

4. Interphone vidéo de porte selon une des revendications 1 à 3, **caractérisé par le fait qu**'au moins une zone de commande (5) active est **caractérisée par** un cadre superposé.

5. Interphone vidéo de porte selon une des revendications 1 à 4, **caractérisé par le fait qu**'au moins une zone de commande (5) active est **caractérisée par** une barre superposée.

6. Interphone vidéo de porte selon une des revendications 1 à 5, **caractérisé par le fait qu'**au moins une zone de commande (5) est **caractérisée par** au moins une lettre et/ou un chiffre.

7. Interphone vidéo de porte selon une des revendications 1 à 6, **caractérisé par le fait qu**'un texte en clair est affecté à au moins une zone de commande (5).

8. Interphone vidéo de porte selon une des revendications 1 à 7, **caractérisé par le fait qu**'un pictogramme est affecté à au moins une zone de commande (5).

9. Interphone vidéo de porte selon une des revendications 1 à 8, **caractérisé par le fait qu**'au moins une zone de commande (5) est **caractérisée par** une représentation semi-transparente.

10. Interphone vidéo de porte selon une des revendications 1 à 9, **caractérisé par le fait qu'**au moins une unité de traitement d'images est prévue pour le traitement des données d'image.

11. Interphone vidéo de porte selon une des revendications 1 à 10, **caractérisé par le fait qu'**au moins une mémoire d'image est disponible pour la mémorisation des images prises par la caméra (1).

12. Interphone vidéo de porte selon une des revendications 1 à 11, **caractérisé par le fait qu'**au moins une caméra (1) est équipée d'un zoom optique.

13. Interphone vidéo de porte selon une des revendications 1 à 12, **caractérisé par le fait qu**'un zoom numérique est prévu pour la représentation de sections d'image.

14. Interphone vidéo de porte selon une des revendications 1 à 13, **caractérisé par le fait qu**'au moins une caméra est déplaçable à l'aide d'un moteur.
